Europäisches Patentamt

European Patent Office

Office européen des brevets

(11) Publication number: **0 281 772**
**A1**

# EUROPEAN PATENT APPLICATION

(21) Application number: **88101781.8**

(22) Date of filing: **08.02.88**

(51) Int. Cl.4: **G02F 3/00** , G02F 1/21 ,
G02F 1/29

(30) Priority: **13.02.87 LU 86777**

(43) Date of publication of application:
**14.09.88 Bulletin 88/37**

(84) Designated Contracting States:
**BE DE ES FR GB GR IT LU NL**

(71) Applicant: **Europäische
Wirtschaftsgemeinschaft Bâtiment Jean
Monnet
Plateau du Kirchberg
2920 Luxemburg(LU)**

(72) Inventor: **Smith, Stanley Desmond, Prof.
4 Cherry Tree View
Balerno Edinburgh EH14 5AP(GB)**
Inventor: **Walker, Andrew Charles, Dr.
20 Mortonhall Road
Edinburgh EH9 2HW(GB)**

(74) Representative: **Weinmiller, Jürgen
Lennéstrasse 9 Postfach 24
D-8133 Feldafing(DE)**

(54) A light modulator based on a multilayer non-linear fabry-perot interference filter.

(57) The invention refers to a light modulator comprising a semiconductor optical interference filter wafer (4, 11) of the multilayer Fabry-Perot type, a light beam (8, 13) directed onto said filter wafer and control means (5, 6, 14, 15) for controlling the optical characteristics of said wafer. According to the invention, the wafer is reticulated such that it forms an array of mutually independent filter pixels, and the control means are conceived to influence independently the individual pixels.

FIG. 1

EP 0 281 772 A1

## A LIGHT MODULATOR BASED ON A MULTILAYER NON-LINEAR FABRY-PEROT INTERFERENCE FILTER

The present invention relates to a light modulator comprising a semiconductor optical interference filter wafer of the multilayer Fabry-Perot type, a light beam directed onto said filter wafer, and control means for controlling the optical characteristics of said wafer.

Interference filters which can control the reflection or transmission of a light beam are known for example from the periodical J. Opt. Soc. Am. 72 (1982), page 1769. In further papers, such as published in Optics Communications, vol. 51, n° 5, 1984, pages 357 to 362, or Applied Physics Letters, 49(14) 1986, pages 844 to 846, practical results on bistable interference filters have been reported. These results, however, only concern experimental setups and have not yet reached the stage of industrial application.

The invention aims at the improvement of these experimental setups and at proposing a light modulator which provides addressing features such that a spatial light modulator is obtained.

According to the invention, this aim is achieved by a light modulator comprising a semiconductor optical interference filter wafer of the multilayer Fabry-Perot type, a light beam directed onto said filter wafer and control means for control ling the optical characteristics of said wafer, characterized in that said wafer is reticulated such that it forms an array of mutually independent filter pixels and that the control means are conceived to influence independently the individual pixels.

In one embodiment of the invention, the thickness of the filter spacer or middle layer of the wafer is chosen in relation to the light beam wavelength such that the pixels operate as modulators for the incident light beam.

Alternately, the thickness of the filter spacer or middle layer of the wafer is chosen in relation to the light beam wavelength such that the pixels operate as bistable switches for the incident light beam.

The control means can either be based on an electron beam which is scanned by conventional deflection electrodes in a cathode ray tube in order to direct the beam on selected pixels of the wafer, or on a light beam which is directed by a convenient light scanner onto selected pixels of the wafer. In both cases the reaction of the wafer on the first mentioned light beam in the zone of the selected pixels is influenced.

The invention will now be described in further detail by means of two embodiments with reference to the attached drawings, in which

Fig. 1 shows schematically a light modulator controlled by an electron beam and

Fig. 2 a light modulator controlled by a light beam.

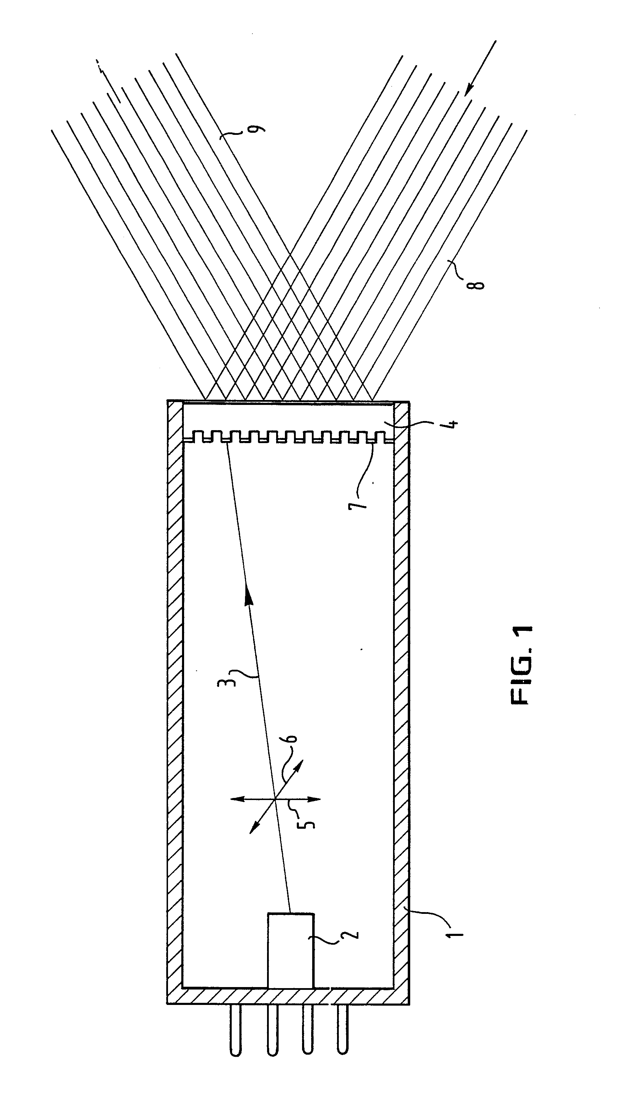

The modulator according to fig. 1 includes a cathode ray tube 1 in which an electron gun assembly 2 generates an electron beam 3 in the direction of a screen 4. Beam deflection means in two orthogonal directions, which are symbolized by arrows 5 and 6, are provided between the gun assembly 2 and the screen 4.

The screen is constituted by a Fabry-Perot multilayer interference filter which is reticulated on the inner side such that an array of pixels 7 is obtained. Due to this reticulation, the individual pixels are thermally isolated from adjoining pixels and can be controlled independently by the electron beam 3.

In operation, a light beam 8 of relatively high power is applied to the screen 4 and a read-out device (not shown in the drawings) is disposed in such a position as to register the light beam 9 reflected from the screen surface 4. The reflection characteristics of the screen depend on the thickness of the filter spacer or middle layer of the interference filter wafer 7, on the wavelength of the beam 8 and on the temperature of the wafer. The latter can be modified by the electron beam 3. It is thus possible to transfer a spatial information from the electron beam 3 to the light beam 8-9 by creating a corresponding heat distribution on the interference filter array. The conditions are set such that, in the absence of the electron beam, the filter is operating at a Fabry-Perot peak (minimum reflectivity) or detuned so as to be just next to such a peak (high reflectivity). The action of the electron beam is then to shift the peak wavelength, as a result of the thermo-optic effect, such as to modulate the optical reflectivity. Alternately, the filter is operated in an optically bistable manner to permit switching between high and low reflectivity states. In this case, the relatively high irradiance light beam 8 is adjusted to bias the array near its switch-on point (high reflectivity), while the electron beam 3 of relatively low intensity applies only sufficient power to take a chosen pixel onto its switch-on state, in which the light beam is only weakly reflected. The mechanism of the switching effect in the filter again depends on temperature-tuning of the filter pass band caused by the temperature response of the refractive index of the filter material. If the filter array has a narrow pass filter characteristic with its peak response close to the wavelength of the light beam 8, it is possible to obtain fast and efficient modulation of said beam or bistable switching through the temperature change caused by the heating effect obtained by the electron beam 3. The detuning of the filter with respect to the wavelength of the light beam 8, which determines the type of response obtained, can further be adjusted in use by varying the angle of the filter relative to the beam 8 or by controlling the ambient temperature of the filter.

In dependence of an appropriate detuning of the interference filter, two general modes of operation can thus be achieved, a modulator mode and a memory mode. In the modulator mode, the signal information contained in the electron beam 3 is transferred to the pixels array 7 and from there to the light beam 9 of a relatively high power level. In the bistable memory mode, the pixel remains in a latched state after the electron beam has disappeared from the respective pixel. Thus, the device operates in this memory mode as an optical frame or image store. To erase a frame of information, represented by the switching state of the pixels, it is necessary to briefly attenuate the light beam 8, for example by an electro-optic modulator in the beam 8, programmed in synchronization with the scan deflection of the electron beam 3. A possible means for selectively erasing only a part of the information is to include a continuous (uniform) background scan of the electron beam to hold the pixels in their respective actual switching state. In this case, the background scan can be interrupted when the electron beam passes over a selected pixel to ensure the controlled switch-off of this pixel.

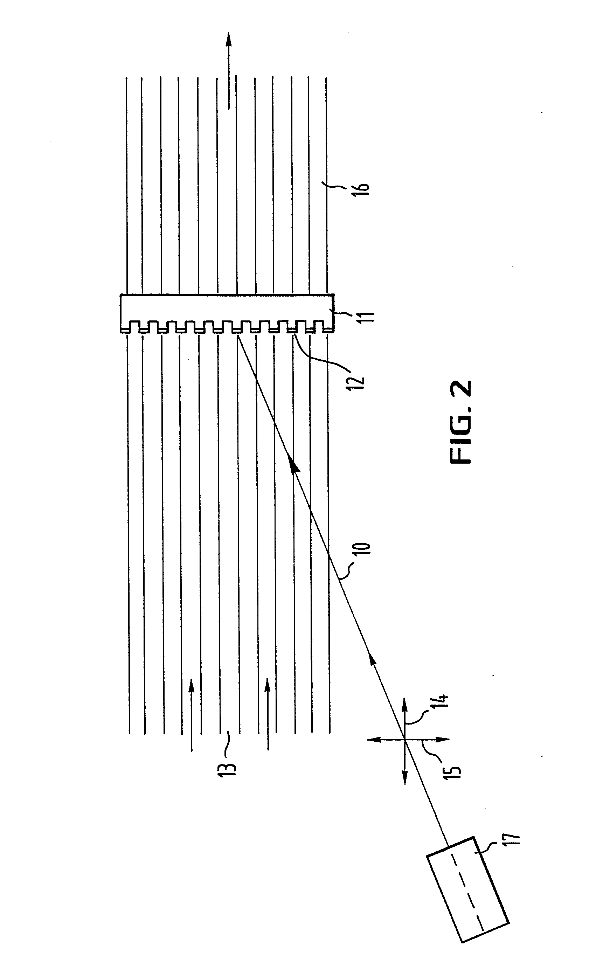

Fig. 2 shows an equivalent device using a light beam 10 derived from a signal light source 17 instead of the electron beam.

It is not necessary in this case to inclose the interference filter wafer 11 with the pixels array 12 in a vacuum tube, and the light beam 13 which is equivalent to the light beam 8 of fig. 1 can strike the interference filter wafer 11 from either side. The control light beam 10 passes through a convenient optical scanner (arrows 14 and 15) and can be directed to any selected pixel of the array 12. Similarly to the preceding case, the filter peak corresponds to or is slightly detuned from the wavelength of the beam 13 such that a small energy amount injected through the control beam 10 into a particular pixel substantially modifies the transmission rate of the wafer 11 through the respective pixel. Again, the device can be operated either as a modulator (for example, amplifying the weak control beam to provide an intense output) or as an array of bistable switches (providing a memory or frame-store function). In both cases the output beam 16 contains in amplified form the information written by the beam 10 into the pixels.

Of course, the beam 13 can also be applied to the rear side of the filter wafer 11 such that the information is transferred to the output beam 16 by modification of the reflection rate of individual pixels. In this reflection mode of operation (which includes the electron beam addressed device) a thin light absorbing layer is commonly added on top of the filter layers. This maximises sensitivity and provides an absorbing surface for efficient input of the control beam. For the electron beam control, this layer must also be electrically conducting (e.g. Aluminium) to prevent electrical charging of the filter wafer.

For clarity sake, the optical systems needed to transport the various light beams through the system are not shown in the drawings and described in detail, these systems being of conventional structure.

## Claims

1. A light modulator comprising a semiconductor optical interference filter wafer of the multilayer Fabry-Perot type, a light beam directed onto said filter wafer and control means for controlling the optical characteristics of said wafer, characterized in that said wafer (4, 11) is reticulated such that it forms an array of mutually independent filter pixels (7, 12), and that the control means (5, 6, 14, 15) are conceived to influence independently the individual pixels.

2. A modulator according to claim 1, characterized in that the thickness of the filter spacer or middle layer of the wafer is chosen in relation to the light beam wavelength such that the pixels (7, 12) are operated as modulators for the incident light beam (8, 13).

3. A modulator according to claim 1, characterized in that the thickness of the filter spacer or middle layer of the wafer is chosen in relation to the light beam wavelength such that the pixels (7, 12) are operated as bistable switches for the incident light beam (8, 13).

4. A modulator according to claim 2 or 3, characterized in that the control means are constituted by a cathode ray tube (1), the wafer (4) forming the screen of said tube, the control being obtained by the electron beam (3) of said tube which beam is directed by beam deflection means (5, 6) onto selected pixels (7) of the wafer, such that the reflection rate of the wafer is modified in the zones of said selected pixels, the light beam (8) being directed onto the wafer (4) along a convenient angle of incidence (fig. 1).

5. A modulator according to claim 4, characterized in that the angle of the wafer (4) relative to the light beam (8) is adjustable.

6. A modulator according to claim 1, characterized in that the control means are constituted by a light scanner (14, 15) receiving a further light beam (10) and being able to deflect this beam in order to direct it to a selected pixel (12) of the wafer (11), thus influencing the reaction of the wafer to the first mentioned light beam (13) in the zone of said selected pixels (fig. 2).

7. A modulator according to claim 6, characterized in that the first mentioned light beam (13) is applied to the wafer (11) in such a way that the further light beam (10) is able to influence the transmission rate of the selected pixels.

8. A modulator according to claim 6, characterized in that the first mentioned light beam is applied to the wafer at a convenient angle of incidence such that the further light beam is able to influence the reflection rate of the selected pixels.

FIG. 1

0 281 772

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | APPLIED OPTICS, vol. 25, no. 10, 15th May 1986, pages 1550-1564, Optical Society of America; S.D. SMITH: "Optical bistability, photonic logic, and optical computation" * Page 1559, column 1, lines 21-35; page 1560, column 1, line 26 - column 2, line 3 * | 1-3,5-8 | G 02 F 3/00<br>G 02 F 1/21<br>G 02 F 1/29 |
| D,A | OPTICS COMMUNICATIONS, vol. 51, no. 5, 1st October 1984, pages 357-362, Elsevier Science Publishers B.V.; S.D. SMITH et al.: "Room temperature, visible wavelength optical bistability in ZnSe interference filters" * Page 357, column 1, line 19 - column 2, line 11; page 360, column 1, lines 11-13; column 2, lines 16-20; page 361, column 2, line 42 - page 362, column 1, line 4; figure 2 * | 1-3,5-8 | |
| A | OPTICAL ENGINEERING, vol. 24, no. 1, January/February 1985, pages 119-123, Society of Photo-Optical Instrumentation Engineers; A. SCHWARTZ et al.: "Electron-beam-addressed microchannel spatial light modulator" * Figure 1 * | 4 | TECHNICAL FIELDS SEARCHED (Int. Cl.4)<br><br>G 02 F |
| A | EP-A-0 155 802 (AT & T CO.) * Page 12, line 30 - page 13, line 1; figure 11 *<br><br>-/- | 1 | |

The present search report has been drawn up for all claims

| Place of search | Date of completion of the search | Examiner |
|---|---|---|
| THE HAGUE | 27-05-1988 | GALANTI M. |

FPO FORM 1503 03.82 (P0401)

European Patent
Office

EUROPEAN SEARCH REPORT

Application Number

EP 88 10 1781

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | APPLIED PHYSICS LETTERS, vol. 46, no. 1, 1st January 1985, pages 70-72, American Institute of Physics; A. MIGUS et al.: "One-picosecond optical NOR gate at room temperature with a GaAs-AlGaAs multiple-quantum-well nonlinear fabry-perot etalon" <br> * Page 72, column 1, lines 24-33 * <br> ----- | 1-3,5-8 | |
| | | | **TECHNICAL FIELDS SEARCHED (Int. Cl.4)** |

The present search report has been drawn up for all claims

| Place of search | Date of completion of the search | Examiner |
|---|---|---|
| THE HAGUE | 27-05-1988 | GALANTI M. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

FPO FORM 1503 03.82 (P0401)